(19) Europäisches Patentamt
European Patent Office
Office européen des brevets

(11) **EP 3 717 535 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **18804664.3**

(22) Anmeldetag: **27.11.2018**

(51) Internationale Patentklassifikation (IPC):
**C08G 18/46** (2006.01)    **C08G 73/10** (2006.01)
**C08G 73/16** (2006.01)

(52) Gemeinsame Patentklassifikation (CPC):
**C08G 18/4615; C08G 18/4676; C08G 73/16**

(86) Internationale Anmeldenummer:
**PCT/EP2018/082714**

(87) Internationale Veröffentlichungsnummer:
**WO 2019/105935 (06.06.2019 Gazette 2019/23)**

(54) **IMIDHALTIGE POLYESTER**

POLYESTER CONTAINING IMIDE

POLYESTER CONTENANT DES IMIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2017 EP 17204379**

(43) Veröffentlichungstag der Anmeldung:
**07.10.2020 Patentblatt 2020/41**

(73) Patentinhaber: **Covestro Intellectual Property GmbH & Co. KG**
**51373 Leverkusen (DE)**

(72) Erfinder:
• **SCHEDLER, Michael**
**51381 Leverkusen (DE)**
• **NEFZGER, Hartmut**
**50259 Pulheim (DE)**
• **MEINE, Niklas**
**40223 Düsseldorf (DE)**
• **JÄGER, Gernot**
**50733 Köln (DE)**
• **HAGEN, Torsten**
**45257 Essen (DE)**
• **BAECKER, Michael**
**41352 Korschenbroich (DE)**
• **NORDMANN, Peter**
**41539 Dormagen (DE)**

(74) Vertreter: **Levpat**
**c/o Covestro AG**
**Gebäude 4825**
**51365 Leverkusen (DE)**

(56) Entgegenhaltungen:
**DE-A1- 2 023 456    FR-A- 1 445 078**

## Beschreibung

Die vorliegende Erfindung betrifft ein spezielles Verfahren zur Herstellung von Hydroxylgruppen-terminierten, Imidgruppen-haltigen Polyesterolen, diese Polyester selbst, sowie deren Verwendung zur Herstellung von Polyurethanen.

In US 3,217,014 B1 und der Veröffentlichung "Synthesis and Properties of Polyesterimides and their Isomers", Sukumar Maiti and Sajal Das, Journal of Applied Polymer Sciene, Vol. 26, 957-978 (1981), Wiley & Sons, Inc. wird eine Synthese von Hydroxylgruppen-terminierten, Imidgruppen-haltigen Polyesterolen beschrieben. Dazu wird zunächst Trimellitsäure oder Hemimellitsäure, bzw. deren Anhydrid, mit p, o oder m-Aminobenzoesäure zu einer aromatischen Imidgruppen-haltigen Dicarbonsäure kondensiert und diese dann mit einem Alkohol verestert. In beiden Fällen werden zur Herstellung der Imidgruppen-haltigen Dicarbonsäure große Mengen an Lösemittel wie DMF verwendet. Dies macht einen sehr aufwendigen Aufreinigungsschritt erforderlich, in dem das Lösemittel entfernt wird, bevor die Dicarbonsäure der Veresterung zugeführt werden kann.

Die in den Schriften beschriebenen Hydroxylgruppen-terminierten Imidgruppen-haltigen Polyesterole weisen hohe Schmelzpunkte oberhalb 250°C auf, wodurch sie zur Verwendung als Reaktionspartner von Isocyanaten bei der Polyurethanherstellung nicht geeignet sind.

In FR 1445078 A und DE 2023456 A1 werden ebenfalls Hydroxylgruppen-terminierten Imidgruppen-haltigen Polyesterole als Lacke für Drähte beschrieben. Hierzu werden Aminoalkohole, Aminocarbonsäuren oder Diamine mit Carbonsäureanhydriden umgesetzt, wobei beide Anmeldungen mindestens bifunktionelle Polyole erhalten. Dies wird durch die Verwendung von mindestens trifunktionellen Carbonsäuren oder deren Anhydriden (vor allem Trimellitsäureanhydrid (3-funktionell) oder Pyromellitsäuredianhydrid (4-funktionell). Die Verwendung dieser polyfunktionellen Carbonsäuren führt dazu, dass die entstehenden Polyole eine hohe Viskosität haben und daher nur nach Lösen im geeigneten Lösemittel verarbeitet werden können.

Aufgabe der vorliegenden Erfindung war die Bereitstellung eines deutlich einfacheren und damit wirtschaftlicheren Verfahrens zur Herstellung von Hydroxylgruppen-terminierten, Imidgruppen-haltigen Polyesterolen als aus dem Stand der Technik bekannt. Darüber hinaus sollten die Polyesterole sich zum Einsatz bei der Polyurethan-Schaumherstellung eignen. Eine Verwendung von Polyesterolen in Lösemitteln zur Herstellung von Polyurethan-Schäumen ist technisch und ökonomisch nicht sinnvoll, sodass es Aufgabe war Imid-haltige Polyesterole herzustellen, die eine geringere Viskosität haben, sodass diese Polyesterol ohne Lösemittel weiterverarbeitet werden können. Ein dritter Aspekt war außerdem die Verwendung von biobasierten Rohstoffen als kostengünstige und nachhaltige Alternative zu den technisch erhältlichen Rohstoffen. Diese Aufgabe wurde erfindungsgemäß gelöst durch ein Verfahren zur Herstellung von Hydroxylgruppen-terminierten Polyesterolen (A), dadurch gekennzeichnet, dass

in einem ersten Verfahrensschritt zunächst Imidgruppen-enthaltende Mono- oder Polycarbonsäuren (B) durch Umsetzung von

(B.1) mindestens einer Aminosäure, welche eine oder mehrere Aminogruppen und eine oder mehrere Säuregruppen aufweist, mit
(B.2) mindestens einem Carbonsäureanhydrid, welches genau eine Anhydridgruppe und keine weiteren freien Säuregruppen aufweist, in Gegenwart von
(C) mindestens einem Di- und/oder Polyol mit einem Molekulargewicht von 62 bis 1000 g/mol,

hergestellt werden, und in einem zweiten Verfahrensschritt das im ersten Verfahrensschritt erhaltene Reaktionsgemisch

-   ohne Aufreinigung,
-   *gegebenenfalls* unter Zusatz von weiterer Komponente B.2 und/oder weiterer Komponente C und/oder (D) weiteren Mono- und/oder Polycarbonsäuren, die nicht unter die Definition der Komponenten (B) und (B.2) fallen,

unter Polykondensationsbedingungen verestert wird,
wobei gegebenenfalls im ersten Verfahrensschritt und/oder im zweiten Verfahrensschritt Hilfs- und Zusatzstoffe (E) verwendet werden und

wobei im ersten Verfahrensschritt neben Komponente (C) kein weiteres Lösemittel zugesetzt wird.

Infolge der Verwendung von Aminosäuren und lediglich zweifunktionellen Carbonsäureanhydriden mit genau einer genau eine Anhydridgruppe und keiner weiteren Säuregruppe, wodurch Imid-haltige Polyerster-Polyole erhalten werden, die in einem lösemittelfreien, und damit besonders wirtschaftlich sinnvollen, Ein-Topf-Prozess hergestellt werden und durch die Vermeidung von tri- oder polyfunktionellen Carbonsäureanhydriden, wodurch eine niedrigere Funktionalität und Viskosität als die im Stand der Technik beschriebene erreicht werden kann. Überraschenderweise zeigt sich, dass diese minderfunktionellen Polyole ohne Lösemittel weiter verarbeitet werden können und daher sehr gut für die Herstellung von Polyurethan-Schäumen geeigent sind.

Als Komponente B.2 bzw. Komponente C können im zweiten Verfahrensschritt die gleichen oder andere Verbindungen eingesetzt werden wie/als im ersten Verfahrensschritt.

Im vorliegenden Verfahren dient Komponente (C) zunächst, d.h. im ersten Verfahrensschritt, als Lösemittel für die Komponenten (B.1) und (B.2), so dass kein weiteres Lösemittel zugegeben werden muss. In einer bevorzugten Ausführungsform wird im ersten Verfahrensschritt neben Komponente (C) maximal eine Menge, deren Volumen kleiner ist als das gemeinsame Volumen der Komponenten (B.1), (B.2) und (C), an weiteren Lösemitteln zugegeben. Im erfindungsgemäßen Verfahren werden im ersten Verfahrensschritt neben Komponente (C) keine weiteren Lösemittel zugegeben. Als ggf. zu verwendende "weitere Lösemittel" seien lediglich beispielhaft genannt aliphatische und aromatische Kohlenwasserstoffe (z.B. Benzine, Toluol), Monoalkohole (Ethanol), Ether (THF), Ester (Ethylacetat), Ketone (Aceton), Halogenkohlenwasserstoffe (Methylenchlorid), Stickstoff- und Schwefelverbindungen (DMF, DMSO).

Im zweiten Verfahrensschritt dient Komponente (C) als Kondensationspartner für Komponente (B) und die gegebenenfalls zugegebene Komponente (D).

Da neben Komponente (C) im ersten Verfahrensschritt kein weiteres Lösemittel zugegeben werden muss, liegt der Vorteil des Erfindungsgemäßen Verfahrens gegenüber dem Stand der Technik demzufolge darin, dass das Produkt aus dem ersten Verfahrensschritt nicht aufgereinigt werden muss, d.h. nicht von zugegebenem Lösemittel befreit werden muss, bevor es der Veresterung zugeführt wird. Somit kann die Synthese als Eintopfsynthese durchgeführt werden.

Gegenstand der vorliegenden Erfindung ist auch ein Verfahren wie zuvor beschrieben, wobei zur Herstellung der Hydroxylgruppen-terminierten Polyesterolen (A) neben den Komponenten (B.1), (B.2), (C), (D) und (E) eine weitere Komponenten (F) verwendet wird und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt. Komponente (F) umfasst Di- und Polyole, die nicht unter die Definition der Komponente (C) fallen.

Bevorzugt ist die zuerst beschriebene Verfahrensvariante, bei der ausschließlich die Komponenten (B.1), (B.2), (C), (D) und (E), nicht (F) eingesetzt werden.

Der erste Verfahrensschritt wird bevorzugt bei Temperaturen von 25°C bis 200 °C, besonders bevorzugt von 80 bis 180 °C durchgeführt. Der zweite Verfahrensschritt wird unter Polykondensationsbedingungen durchgeführt; das bedeutet im Rahmen der vorliegenden Erfindung bei Temperaturen von bevorzugt 150 bis 250 °C, besonders bevorzugt von 180 bis 220°C und bei vermindertem Druck im Bereich von bevorzugt 0,1 bis 300 mbar, besonders bevorzugt 1 bis 200 mbar.

Bevorzugt werden im ersten Verfahrensschritt Aminosäuren, Carbonsäureanhydride und Di/Polyole zusammen in einer Apparatur vorgelegt und unter Rühren bei Normaldruck erhitzt. Besonders bevorzugt ist hierbei eine Fahrweise die eine Umsetzung der Aminosäuren mit dem Carbonsäureanhydriden zu Imiden ermöglicht ohne bereits eine Veresterung zwischen Carbonsäuregruppen und Di/Polyol durchzuführen. Dies lässt sich über Bestimmung der Aminzahl, Säurezahl und OH-Zahl des Reaktionsgemischs bestimmen. Im ersten Verfahrensschritt kann auch bereits entstehendes Wasser über eine Kolonne abdestilliert werden. Dies wird nicht als Aufreinigung im Sinne der Erfindung verstanden.

Im zweiten Verfahrensschritt wird die Reaktionsmischung, bevorzugt ohne Zugabe weiterer Stoffe, so hoch erhitzt, dass die Veresterung stattfindet und Reaktionswasser über eine Kolonne abdestilliert wird. Bevorzugt ist hierbei eine Fahrweise bei der ein Großteil des freiwerdenden Wassers im Normaldruck abgespalten wird und anschließend, ggf. nach Zugabe eines Veresterungskatalysators, das restliche Reaktionswasser im Unterdruck abdestilliert wird. Bevorzugt ist ein Verfahren, dass nach Abspaltung der zu erwartenden Wassermenge ein Produkt mit einer Säurezahl < 3 mg KOH/g, besonders bevorzugt < 1 mg KOH/g, und einer Aminzahl < 3 mg KOH/g, besonders bevorzugt < 1 mg KOH/g und der gewünschten OH-Zahl liefert. Gegebenenfalls kann die gewünschte OH-Zahl durch Zusatz weiterer Di/Polyole, gefolgt von einer Äquilibrierung des Gemisches im Vakuum bei 150-250 °C eingesellt werden.

Ein weiterer Gegenstand der vorliegenden Erfindung sind Hydroxylgruppen terminierte Polyesterole (A), die erhältlich sind nach dem Verfahren wie zuvor beschrieben, und die bevorzugt einen Schmelzpunkt < 23°C, besonders bevorzugt ≤ 20°C aufweisen.

Ein weiterer Gegenstand der vorliegenden Erfindung sind Hydroxylgruppen terminierte Polyesterole (A), die erhältlich sind aus

(B) Imidgruppen enthaltenden Mono- oder Polycarbonsäuren,
die durch Lösemittel-freie Umsetzung von

(B.1) mindestens einer Aminosäure, welche eine oder mehrere Aminogruppen und eine oder mehrere Säuregruppen aufweist, mit
(B.2) mindestens einem Carbonsäureanhydrid, welches genau eine Anhydridgruppe und keine weiteren freien Säuregruppen aufweist, erhältlich sind,

(C) mindestens einem Di- und/oder Polyol mit einem Molekulargewicht von 62 bis 1000 g/mol,
(D) gegebenenfalls weiteren Mono- und/oder Polycarbonsäuren, die nicht unter die Definition der Komponenten (B) und (B.2) fallen,
(E) gegebenenfalls Hilfs- und Zusatzstoffen

und gegebenenfalls weiterer Komponente (B.2), sowie gegebenenfalls weiterer Komponente (C), und bevorzugt einen Schmelzpunkt < 23°C, besonders bevorzugt ≤ 20°C aufweisen.

Ebenso sind Gegenstand der vorliegenden Erfindung Hydroxylgruppen-terminierte Polyesterolen (A) wie zuvor beschrieben, wobei jedoch zu ihrer Herstellung neben den Komponenten (B.1), (B.2), (C), (D) und (E) eine weitere Komponente (F) verwendet wird und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt. Komponente F umfasst Di- und Polyole, die nicht unter die Definition der Komponente C fallen.

Bevorzugt sind Hydroxylgruppen-terminierte Polyesterolen (A) für deren Herstellung ausschließlich die Komponenten (B.1), (B.2), (C), (D) und (E) eingesetzt werden.

Die erfindungsgemäßen Hydroxylgruppen-terminierten Polyesterole (A) weisen bevorzugt OH-Zahlen von 20 bis 500 mg KOH/g, besonders bevorzugt von 35 bis 350 mg KOH/g, zahlenmittlere Funktionaltäten von 1,4 bis 3,5, bevorzugt von 1,5 bis 2,6 auf. Weiterhin handelt es sich bei den erfindungsgemäßen Polyesterole um homogene Flüssigkeiten ohne Feststoffanteil, deren Farbe von farblos bis braun variieren kann. Bevorzugt besitzen die erfindungsgemäßen Polyesterole (A) eine Viskosität bei 25 °C < 20000 mPa*s, besonders bevorzugt < 5000 mPa*s bei 25 °C.

Die erfindungsgemäßen Polyesterole (A) besitzen Schmelzpunkte < 23°C, bevorzugt ≤ 20°C, sodass es bei Lagerung bei Raumtemperatur (23°C) nicht zur Bildung von Kristallen kommen kann.

Beschreibung der Komponenten:

Komponente (B):

Bei Komponente (B) handelt es sich um Imidgruppen-enthaltende Mono- und Polycarbonsäuren.

Die Herstellung der Komponente (B) erfolgt durch Umsetzung von Komponente (B.1) mit Komponente (B.2).

Dabei werden die Mengen an Aminosäuren und Carbonsäureanhydriden so gewählt, dass das molare Verhältnis von Aminogruppen aus den Aminosäuren (B.1) zu Anhydridgruppen aus den Carbonsäureanhydriden (B.2) im Bereich von 1,5:1 bis 1:1,5, bevorzugt 0,9:1 bis 1:0,9, besonders bevorzugt 0,95:1 bis 1:0,95 liegt.

Komponente (B.1):

Komponente (B.1) umfasst Aminosäuren, welche eine oder mehrere Aminogruppen und eine oder mehrere Säuregruppen aufweisen.

Dazu gehören beispielsweise gesättigte oder ungesättigte, lineare oder verzweigte, aliphatische oder cycloaliphatische Aminosäuren oder gegebenenfalls verzweigte aromatische Aminosäuren, mit bevorzugt bis zu 20, besonders bevorzugt bis zu 10 Kohlenstoffatomen (einschließlich der C-Atome der Carbonsäuregruppen), die gegebenenfalls Heteroatome aus der Reihe Sauerstoff (ungeachtet der Sauerstoffatome der freien Säuregruppen), Schwefel, Stickstoff (ungeachtet der Stickstoffatome der Aminogruppen) und Halogene aufweisen.

Bevorzugt weisen die Aminosäuren bis zu 2 Aminogruppen und bis zu 2 Säuregruppen auf.

Beispielhaft seien die folgenden Aminosäuren genannt:
Anthranilsäure (o-Aminobenzoesäure), m-Aminobenzoesäure, p-Aminobenzoesäure, Alanin, Arginin, Asparagin, Asparaginsäure, Cystein, Glutamin, Glutaminsäure, Glycin, Histidin, Isoleucin, Leucin, Lysin, Methionin, Phenylalanin, Serin, Threonin, Tryptophan, Tyrosin, Valinm, Ornithin, 3-Aminopropionsäure, 2-Aminobuttersäure, 4-Aminobuttersäure, 6-Aminocapronsäure, 2-Amino-2-methylpropionsäure, 11-Aminoundecansäure, Homoserin.

Bevorzugt sind die Aminosäuren (B.1) ausgewählt aus der Gruppe bestehend aus o-, m-, oder p-Aminobenzoesäure, Glutaminsäure, Asparaginsäue oder Lysin.

Die Aminosäuren können einzeln oder in Mischung im erfindungsgemäßen Verfahren eingesetzt werden.

Komponente (B.2):

Komponente (B.2) umfasst Carbonsäureanhydride, welches genau eine Anhydridgruppen und keine weiteren freien Säuregruppen aufweist.

Dazu gehören beispielsweise gesättigte oder ungesättigte, lineare oder verzweigte, aliphatische oder cycloaliphatische Carbonsäureanhydride oder gegebenenfalls verzweigte aromatische Carbonsäureanhydride mit bevorzugt bis zu 20, besonders bevorzugt bis zu 10 Kohlenstoffatomen (einschließlich der C-Atome der Anhydrid- und freien Carbonsäuregruppen), die gegebenenfalls Heteroatome aus der Reihe Sauerstoff (ungeachtet der Sauerstoffatome der Anhydridgruppen oder der freien Säuregruppen), Schwefel, Stickstoff und Halogene aufweisen.

Beispielhaft seien die folgenden Carbonsäureanhydride genannt:

Phthalsäureanhydrid, Tetrachlorphthalsäureanhydrid, 3-Chloro-Phthalsäureanhydrid, Maleinsäureanhydrid, Citraconsäureanhydrid, Itaconsäureanhydrid, Bernsteinsäureanhydrid, 1,8- Naphthalsäureanhydrid, , Derivate der genannten Anhydride, wie z.B. Alkyl- oder Alkenylbernsteinsäuren mit unverzweigten oder verzweigten C1 bis C24 -Alkyl- bzw. -Alkenylketten, wie (1-Dodecen-1-yl) oder (2-Dodecen-1-yl)bernsteinsäureanhydrid, n-Octenyl-Bernsteinsäureanhydrid, Tetradecenylbernsteinsäureanhydrid, Hexadecenylbernstein-säureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, und Diels-Alder-Adduke aus Furanen und z.B. Maleinsäureanhydrid.

Bevorzugt ist das Carbonsäureanhydrid (B.2) Phthalsäureanhydrid,.

Die Carbonsäureanhydride können einzeln oder in Mischung im erfindungsgemäßen Verfahren eingesetzt werden.

Komponente (C):

Bei Komponente (C) handelt es sich um niedermolekulare Di- und Polyole mit einem Molekulargewicht von 62 bis 1000 g/mol, bevorzugt von 62 bis 450 g/mol.

Dazu zählen monomere und polymere Verbindungen. Bei den Polymeren entspricht das Molekulargewicht dem zahlenmittleren Molekulargewicht.

Bevorzugt weisen die einzusetzenden Di- und Polyole eine Funktionalität von 2 bis 4, besonders bevorzugt 2 bis 3 auf.

Beispielhaft seien die folgenden Di- und Polyole genannt:

i) Ethylenglykol, 1,2-Propandiol, 1,3-Propandiol, 1,4-Butandiol, 2-Methylpropandiol-1,3, 1,5-Pentandiol, Neopentylglykol 1,6-Hexandiol, 3-Methylpentan-1,5-diol, 2,3-Butandiol, Diethylenglykol, Triethylenglykol, Tetraethylenglykol, Dipropylenglykol, Tripropylenglykol, sowie Glycerin, 1,1,1-Trimethylolpropan, Pentaerythrit, Rizinusöl und Oligomere des 1,4-Butylenglykols.

ii) Polyetherpolyole (insbesondere Poly(oxyalkylen)polyole):

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Als Alkohole oder Amine seien beispielhaft genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Rizinusöl, Wasser, Methylamin, Ethylamin, Propylamin, Butylamin, Anilin, Benzylamin, o- und p-Toluidin, $\alpha,\beta$-Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin. Als Alkylenoxide kommen bevorzugt Ethylenoxid, Propylenoxid, Butylenoxid sowie deren Mischungen zum Einsatz.

Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

iii) Polyesterpolyole:

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan, Rizinusöl oder Glycerin.

Die Herstellung der Polyesterpolyole kann weiterhin auch durch Ringöffnungspolymerisation von Lactonen (z.B.

Caprolacton) mit Diolen und/oder Triolen als Starter erfolgen.

Bevorzugt werden Ethylenglykol, Diethylenglykol, 1,2-Propylenglykol, 1,4-Butandiol, besonders bevorzugt wird Ethylenglykol und Diethylenglykol eingesetzt.

Die Di- und Polyole können einzeln oder in Mischung im erfindungsgemäßen Verfahren eingesetzt werden.

Komponente (D):

Komponente (D) umfasst weitere Mono- und/oder Polycarbonsäuren, die nicht unter die Definition der Komponenten (B) und (B.2) fallen.

Dazu gehören beispielsweise gesättigte oder ungesättigte, lineare oder verzweigte, aliphatische oder cycloaliphatische Mono- und/oder Polycarbonsäuren oder gegebenenfalls verzweigte aromatische Mono- und/oder Polycarbonsäuren, mit bevorzugt bis zu 20, besonders bevorzugt bis zu 10 Kohlenstoffatomen (einschließlich der C-Atome der Carbonsäuregruppen), die gegebenenfalls Heteroatome aus der Reihe Sauerstoff (ungeachtet der Sauerstoffatome der Säuregruppen), Schwefel, Stickstoff und Halogene aufweisen.

Bevorzugt weisen die Carbonsäuren (D) bis zu 2 Säuregruppen auf.

Beispielhaft seien die folgenden Mono- und Polycarbonsäuren genannt:
Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Phthalsäure, Isophthalsäure, Terephthalsäure, Maleinsäure, Fumarsäure, Citraconsäure, Mesaconsäure, Ölsäure, Ricinolsäure, Furandicarbonsäure.

Bevorzugt sind die Mono- und Polycarbonsäuren (D) ausgewählt aus der Gruppe bestehend aus Bernsteinsäure, Glutarsäure, Adipinsäure, Phthalsäure, Therephthalsäure, Ölsäure, Ricinolsäure.

Die Mono- und Polycarbonsäuren können einzeln oder in Mischung im erfindungsgemäßen Verfahren eingesetzt werden.

Komponente (E):

Bei Komponente (E) handelt es sich um Hilfs- und Zusatzstoffe, die im Rahmen des ersten und/oder zweiten Verfahrensschrittes dem Reaktionsgemisch hinzugefügt werden können. So können im ersten Verfahrensschritt die Imidbildung katalysierende Verbindungen zugesetzt werden, wie z.B. p-Toluolsulfonsäure, Isochinolin, 4-(Dimethylamino)-pyridin, Pyridin, Triethylamin, Zinkacetat, Essigsäure, Phosphorsäure, Natriumacetat, Benzoesäure oder Schwefelsäure.

Ebenso können dem Reaktionsgemisch Katalysatoren zur Katalyse der Veresterungsreaktion hinzugefügt werden. Hier seien beispielhaft genannt: Zinn(II)-Salze, wie z.B Zinndichlorid, Zinndichlorid-Dihydrat, Zinn(II)-2-ethylhexanoat, Dibutylzinndilaurat; Titanalkoxylate, wie z.B. Titantetrabutanolat, Tetraisopropyltitanat; Bismuth(III)-neodecanoat; Zink(II)-acetat; Mangan(II)-acetat oder Protonsäuren, wie z.B. p-Toluolsulfonsäure. Weiterhin können die Veresterungen auch durch Enzyme, wie z.B. Esterasen und/oder Lipasen, katalysiert werden.

Weitere Hilfs- und Zusatzstoffe umfassen z.B. Flammschutzmittel, oberflächenaktive Zusatzstoffe (Tenside), wie Emulgatoren und Schaumstabilisatoren, Reaktionsverzögerern (z.B. sauer reagierende Stoffe wie Salzsäure oder organische Säurehalogenide), Zellreglern (wie beispielsweise Paraffine oder Fettalkohole oder Dimethylpolysiloxane), Pigmenten, Farbstoffen, Stabilisatoren gegen Alterungs- und Witterungseinflüsse, Weichmachern, fungistatisch und bakteriostatisch wirkende Substanzen, Füllstoffen (wie beispielsweise Bariumsulfat, Kieselgur, Ruß- oder Schlämmkreide) und Trennmittel.

Komponente (F):

Komponente (F) umfasst z.B. Di- und Polyole, die nicht unter die Definition der Komponente (C) fallen. Dies können Di- und Polyole mit einem Molekulargewicht > 1000 g/mol und/oder Polyole mit Funktionalitäten > 4 sein. Dabei handelt es sich beispielsweise um Polyesterpolyole, Polyetherpolyole, Polyethercarbonatpolyole, Polyethercarbonatpolyole, wie sie für die Herstellung von homogenen und von zellförmigen Polyurethanen an sich bekannt sind und wie sie z.B. in der EP-A 0 007 502, Seiten 8 - 15, beschrieben werden.

Biobasierte Komponenten

In einer bevorzugten Ausführungsform werden die Hydroxylgruppen-terminierte Polyesterole (A) gemäß dem erfindungsgemäßen Verfahren hergestellt, wobei mindestens eine der Komponenten (B.1), (B.2), (C), (D), (E) und (F) biobasiert ist.

Im Rahmen der vorliegenden Erfindung bedeutet biobasiert "hergestellt aus nachwachsenden Rohstoffen". Dies umfasst Verbindungen, die aus nachwachsenden Rohstoffen isoliert oder daraus hergestellt werden. Dazu im Gegensatz stehen Verbindungen, die aus fossilen Rohstoffen, wie Erdöl, Erdgas oder Kohle, hergestellt werden.

Bei den aus nachwachsenden Rohstoffen isolierten Verbindungen handelt es sich beispielsweise um natürliche Polyole, wie z.B. Rizinusöl.

Bei den aus nachwachsenden Rohstoffen hergestellten Verbindungen handelt es sich beispielsweise um natürliche Aminosäuren, oder um Di-oder Polyole, wie z.B. Glycerin, Ethylenglykol, Diethylenglykol, 1,3-Propandiol, 1,4-Butandiol, 1,6-Hexandiol und Polyole aus Pflanzenölen, wie z.B. Rizinusöl, Lesquerellaöl, Rapsöl, Sojaöl und/oder aus ungesättigten Fettsäuren, wie z.B. Ölsäure oder Rizinolsäure. Weiterhin können aus nachwachsenden Rohstoffen hergestellte Carbonsäuren, wie z.B. Bernsteinsäure, Adipinsäure, Korksäure, Sebacinsäure oder Azelainsäure eingesetzt werden.

Polyetherole auf Basis nachwachsender Rohstoffe sind beispielsweise durch ringöffnende Polymerisation von Alkylenoxiden unter Verwendung von biobasierten Startermolekülen herstellbar. Als biobasierte Startermoleküle können z.B. neben Sorbitol, Zucker oder Glycerin auch hydroxylgruppenhaltige Fettsäureester und/ oder hydroxylmodifizierte Fettsäureester, zum Beispiel hydroxygruppenhaltige Fette oder Öle und/ oder hydroxylmodifizierte Fettderivate, wie fettbasierte Dimerdiole, verwendet werden. Als Beispiele sind in diesem Zusammenhang das Rizinusöl und das Lesquerellaöl zu erwähnen, die beide bereits von Natur aus über Hydroxygruppen verfügen. Bei den sonstigen natürlichen Ölen, wie beispielsweise Sojabohnenöl, Sonnenblumenöl, Rapsöl oder Palmöl, muss für eine Umsetzung mit den Alkylenoxiden die Einführung von Hydroxygruppen durch chemische Umsetzungen erfolgen, da diese im Allgemeinen Triglyceride von gesättigten und ungesättigten Fettsäuren sind und somit von Natur aus keine Hydroxygruppen beinhalten.

Die gemäß der Erfindung erhältlichen Hydroxylgruppen-terminierte Polyesterole (A) finden Verwendung bei der Herstellung von Polyurethanen, vorzugsweise Polyurethanschaumstoffen (Hart- und Weichschaumstoffe). Dazu werden sie mit Isocyanaten zur Reaktion gebracht. Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Vorzugsweise weisen die unter Verwendung der erfindungsgemäßen Polyesterole (A) hergestellten Polyurethanweichschaumstoffe Kennzahlen von 70 bis 130, bevorzugt 80 bis 120 und Raumgewichte von 4 bis 600 kg/m$^3$, bevorzugt 60 bis 120 kg/m$^3$. Vorzugsweise weisen die unter Verwendung der erfindungsgemäßen Polyesterole (A) hergestellten Polyurethanhartschaumstoffe Kennzahlen von 70 bis 500, bevorzugt 100 bis 350 und Raumgewichte von 10 bis 1000 kg/m$^3$, bevorzugt 20 bis 120 kg/m$^3$. Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (VI)$$

Die Verwendung der erfindungsgemäßen Hydroxylgruppen-terminierten Polyesterole (A) zur Herstellung von Polyurethanen, vorzugsweise Polyurethanschaumstoffen ist ebenfalls Gegenstand der Erfindung.

Darüber hinaus sind die so erhältlichen Polyurethane, bevorzugt Polyurethanschaumstoffe ein weiterer Gegenstand der vorliegenden Erfindung.

Die erfindungsgemäß erhältlichen Polyurethanschaumstoffe, finden beispielsweise folgende Anwendung: Dämmplatten, Metall-Sandwichpaneele, Kühlgeräteisolieren, Rohrisolierung, Montageschaum, Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelemente.

### Beispiele

1. Methoden und Materialien

#### 1.1 Verwendete Rohstoffe:

| Trimellitsäureanhydrid | (Fluka) |
| Anthranilsäure | (Sigma-Aldrich) |
| Essigsäure | (Fisher Scientific) |

| Glutarsäure, techn. | (Lanxess AG) |
|---|---|
| Adipinsäure | (BASF) |
| Phthalsäureanhydrid | (My-ChemGmbH) |
| Diethylenglykol | (Sigma-Aldrich) |
| Ethylenglykol | (Ineos) |
| DL-Glutaminsäure | (Sigma-Aldrich) |
| DL -Asparaginsäure | (abcr) |
| DL -Lysin | (Sigma-Aldrich) |
| $SnCl_2 \cdot 2H_2O$ | (Sigma-Aldrich) |
| Glycerin | (Sigma-Aldrich ) |
| 3-Amino-1-Propanol | (Acros-Organics) |
| Terephthalsäurediglykolester | (Sigma-Aldrich) |

| L 2830: | Desmophen® L 2830 (Covestro AG), Aliphatisches Polyetherpolyol mit OHZ 28 mg KOH/g, einer Molmasse von 4000 Da und ca. 90 mol-% primären OH-Endgruppen und einer Viskosität 860 mPas bei 25 °C. |
|---|---|
| TCPP | Levagard PP® (Lanxess AG), Trischlorisopropylphosphat |
| B 8433 | Tegostab® B844 (Evonik Industries AG), Stabilisator-Silikon |
| B 8325 | Tegostab® B8325 (Evonik Industries AG), Stabilisator-Silikon |
| DB | Desmorapid® DB (Covestro AG), Aktivator für die Herstellung von Polyurethan-Hartschaumstoffen |
| 1792 | Desmorapid® 1792 (Covestro AG), Zubereitung enthaltend Diethylenglykol und Kaliumacetat; Trimersisierungskatalysator. |
| A30 | Niax* Catalyst A-30 (Momentive Performance Materials Inc.), Tertiäres Amin. Katalysator für die Wasserreaktion. |
| 117 | Addocat® 117 (Lanxess AG), tertiäres Amin. Katalysator für die Urethanreaktion |
| Wasser | entionisiertes Wasser |
| n-Pentan | (Azelis) |
| 44V70L | Desmodur® 44V70 L (Covestro AG), MDI-Isocyanat mit einem NCO-Gehalt von 30 bis 32 Gew.-% |
| T80 | Desmodur® T80 (Covestro AG), TDI-Isocyanat mit einem NCO-Gehalt von mind. 48 Gew.-% |
| T65N | Desmodur® T65N (Covestro AG), TDI-Isocyanat mit einem NCO-Gehalt von mind. 48 Gew.-% |

## 1.2 Verwendete Methoden

Die Analysen wurden wie folgt durchgeführt:

Viskosität:

Rheometer MCR 51 der Firma Anton Paar entsprechend DIN 53019 mit einem Messkegel CP 50-1, Durchmesser 50 mm, Winkel 1° bei Scherraten von 25, 100, 200 und 500 s$^{-1}$. Die erfindungsgemäßen und nicht erfindungsgemäßen Polyesterpolyole zeigen von der Scherrate unabhängige Viskositätswerte.

| Hydroxylzahl: | gemäß DIN 53240-1 (Verfahren ohne Katalysator, Juni 2013) ermittelt. |
|---|---|
| Säurezahl: | gemäß DIN 51639-1 (November 2014) ermittelt. |
| Aminzahl: | gemäß DIN EN ISO 2114 (Juni 2002) ermittelt. |
| Rohdichte: | gemäß DIN EN ISO 845 (Oktober 2009) ermittelt. |

Brandeigenschaften: für Hartschäume gemäß DIN 4102-1 (Mai 1998) bestimmt. für Weichschäume gemäß DIN 75200 (September 1980) bestimmt.

Stauchhärte Hartschaum: Druckspannung bei 10 % Stauchung gemäß DIN EN ISO 844 (November 2014) bestimmt.

Stauchhärte Weichschaum: Druckspannung bei 40 % Stauchung gemäß DIN EN ISO 3386-1 (Oktober 2015) bestimmt.

Offenzelligkeit: gemäß DIN EN ISO 4590 (Dezember 2016, Verfahren 1) mit AccuPyc 1330 bestimmt

Dimensionsstabillität: gemäß DIN ISO 2796 (Januar 1986) bestimmt

Schmelzpunkt: Es wird bestimmt, ob der Schmelzpunkt der Polyesterole unterhalb der Raumtemperatur liegt. Hierzu wird das Polyesterol nach der Herstellung für mindestens 4 Wochen bei Raumtemperatur (23 °C) gelagert und optisch überprüft, ob das Polyol homogen und im flüssigen Aggregatzustand bleibt. Polyesterole die während dieser Lagerung kristallisieren, Feststoff bilden oder trüb werden, werden verworfen.

## 2. Polyester Synthese

2.1 Eintopf-Synthese Trimellitsäureanhydrid/Ethylenglykol/Glycerin/Aminopropanol/ Terephthalsäurediglykol-Ester (nicht erfindungsgemäß, Vergleichsbeispiel nach FR1445078A)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 300 g Ethylenglykol (4.83 mol), 46 g Glycerin (0.50 mol), 75 g 3-Amino-1-Propanol (1.00 mol) vorgelegt. Die Mischung wurde auf 50 °C aufgewärmt und 192 g Trimellitsäureanhydrid (1.00 mol) wurde zugegeben. Die Mischung wurde für 80 min auf 140 °C aufgeheizt um Amin und Anhydrid zum Imid umzusetzen. Die Reaktionsmischung wurde auf 120 °C abgekühlt und 127 g Terepthalsäurediglykolester (1.00 mol) sowie der Katalysator (14 mg $SnCl_2 \cdot 2H_2O$) wurden zugegeben. Die Reaktionsmischung wurde auf 200 °C Sumpftemperatur erhitzt und der Druck stufenweise über 6 h auf ca. 100 mbar abgesenkt, wobei 298 g Destillat aufgefangen wurden. Für weitere 4 h wurde der Ansatz bei 220 °C Sumpftemperatur und 60 mbar Druck gerührt, wobei weitere 30 g Destillat aufgefangen wurden.

Das erhaltene Produkt war bei Raumtemperatur so hochviskos (>100000 mPa*s bei 25 °C), dass eine weitere Verarbeitung und Verwendung zur Herstellung von Polyurethanschäumen unmöglich war.

### 2.2 Eintopf-Synthese Anthranilsäure/Trimellitsäureanhydrid/Glutarsäure (nicht erfindungsgemäß)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 349 g Diethylenglykol (3,29 mol) vorgelegt. Dazu wurden 192 g Trimellitsäureanhydrid (1,00 mol) und 137 g Anthranilsäure (1,00 mol) gegeben und die Reaktionsmischung wurde für 4 Stunden bei 150 °C Sumpftemperatur gerührt. Es wurde technische Glutarsäure (134 g, 1,00 mol) zugegeben und die Reaktionsmischung wurde über 2 Stunden auf 200 °C Sumpftemperatur erhitzt, wobei Wasser abdestilliert wurde. Es wurden 15 mg $SnCl_2 \cdot 2H_2O$ zugegeben und der Ansatz wurde für 43 Stunden bei 210 °C Sumpftemperatur im Vakuum gerührt. Es wurden 45 g Diethylenglykol (0,42 mol) zugegeben und der Ansatz wurde für weitere 5 Stunden bei 200 °C Sumpftemperatur im Vakuum gerührt. Nach Abkühlen wurden folgende Eigenschaften des Polyesters festgestellt:

    Hydroxylzahl (mg KOH/g): 198
    Säurezahl (mg KOH/g): 1,2
    Viskosität (mPa*s bei 25 °C): n.b. / >50.000
    Viskosität (mPa*s bei 50 °C). 4050

### 2.3 Eintopf-Synthese Anthranilsäure/Phthalsäureanhydrid/Adipinsäure (erfindungsgemäßes Verfahren)

In einem 4L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 849g Diethylenglykol (8,00 mol) vorgelegt. Dazu wurden 296 g Phthalsäureanhydrid (2,00 mol) und 274 g Anthranilsäure (2,00 mol) gegeben und die Reaktionsmischung wurde für 3 Stunden bei 150 °C Sumpftemperatur gerührt. Nach Abkühlen auf 110 °C Sumpftemperatur wurde Adipinsäure (587 g, 4,02 mol) zugegeben und die Reaktionsmischung wurde über 2 Stunden auf 200 °C Sumpftemperatur erhitzt, wobei Wasser abdestilliert wurde. Es wurden 36 mg $SnCl_2 \cdot 2H_2O$ zugegeben und der Ansatz wurde für 66 Stunden bei 200 bis 210 °C Sumpftemperatur im Vakuum gerührt. Nach Abkühlen wurden folgende Eigenschaften des Polyesters festgestellt:

    Hydroxylzahl (mg KOH/g): 177
    Säurezahl (mg KOH/g): 2,0
    Viskosität (mPa*s bei 25 °C): 2330

### 2.4 Eintopf-Synthese Asparaginsäure/Phthalsäureanhydrid/Adipinsäure (erfindungsgemäß)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 497 g Diethylenglykol (4,68 mol) vorgelegt. Dazu wurden 148 g Phthalsäureanhydrid (1,00 mol) und 133 g Asparaginsäure (1,00 mol) gegeben und die Reaktionsmischung wurde für 4,5 Stunden bei 150 °C Sumpftemperatur gerührt. Nach Abkühlen auf 120 °C Sumpftemperatur wurde Adipinsäure (292 g, 2,00 mol) zugegeben und die Reaktionsmischung wurde über 1,5 Stunden auf 200 °C Sumpftemperatur erhitzt, wobei Wasser abdestilliert wurde. Es wurden 19 mg SnCl$_2$·2H$_2$O zugegeben und der Ansatz wurde für 19 Stunden bei 200 °C Sumpftemperatur im Vakuum gerührt. Nach Abkühlen wurden folgende Eigenschaften des Polyesters festgestellt:

Hydroxylzahl (mg KOH/g): 180
Säurezahl (mg KOH/g): 2,0
Viskosität (mPa*s bei 25 °C): 4600

### 2.5 Eintopf-Synthese Glutaminsäure/Phthalsäureanhydrid/Adipinsäure (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 500 g Diethylenglykol (4,71 mol) vorgelegt. Dazu wurden 148 g Phthalsäureanhydrid (1,00 mol) und 147 g Glutaminsäure (1,00 mol) gegeben und die Reaktionsmischung wurde für 2,5 Stunden bei 150 °C Sumpftemperatur gerührt. Nach Abkühlen auf 120 °C Sumpftemperatur wurde Adipinsäure (292 g, 2,00 mol) zugegeben und die Reaktionsmischung wurde über 2 Stunden auf 200 °C Sumpftemperatur erhitzt, wobei Wasser abdestilliert wurde. Es wurden 19 mg SnCl$_2$·2H$_2$O zugegeben und der Ansatz wurde für 25 Stunden bei 200 °C Sumpftemperatur im Vakuum gerührt. Es wurden 47 g Diethylenglykol (0,44 mol) zugegeben und der Ansatz wurde für weitere 15 Stunden bei 200 °C Sumpftemperatur im Vakuum gerührt. Nach Abkühlen wurden folgende Eigenschaften des Polyesters festgestellt:

Hydroxylzahl (mg KOH/g): 202
Säurezahl (mg KOH/g): 0,8
Viskosität (mPa*s bei 25 °C): 2350

### 2.6 Eintopf-Synthese Glutaminsäure/Phthalsäureanhydrid (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 502 g Diethylenglykol (4,73 mol) vorgelegt. Dazu wurden 305 g Phthalsäureanhydrid (2,06 mol) und 304 g Glutaminsäure (2,07 mol) gegeben und die Reaktionsmischung wurde für 2,5 Stunden bei 150 °C Sumpftemperatur gerührt. Die Reaktionsmischung wurde über 2 Stunden auf 210 °C Sumpftemperatur erhitzt, wobei Wasser abdestilliert wurde. Es wurden 20 mg SnCl$_2$·2H$_2$O zugegeben und der Ansatz wurde für 2 Stunden bei 180-210 °C Sumpftemperatur im Vakuum gerührt. Es wurden 98 g Diethylenglykol (0,92 mol) zugegeben und der Ansatz wurde für weitere 11 Stunden bei 200-210 °C Sumpftemperatur im Vakuum gerührt. Nach Abkühlen wurden folgende Eigenschaften des Polyesters festgestellt:

Hydroxylzahl (mg KOH/g): 297
Säurezahl (mg KOH/g): 0,8
Viskosität (mPa*s bei 25 °C): 6500

### 2.7 Eintopf-Synthese Lysin/Phthalsäureanhydrid/Glutarsäure (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 400 g Diethylenglykol (3,77 mol) vorgelegt. Dazu wurden 355 g Phthalsäureanhydrid (2,40 mol) und 176 g Lysin (1,20 mol) gegeben und die Reaktionsmischung wurde für 2,5 Stunden bei 150 °C Sumpftemperatur gerührt. Es wurde technische Glutarsäure (178 g, 1,33 mol) zugegeben und die Reaktionsmischung wurde über 2 Stunden auf 200 °C Sumpftemperatur erhitzt, wobei Wasser abdestilliert wurde. Es wurden 20 mg SnCl$_2$·2H$_2$O zugegeben und der Ansatz wurde für 16 Stunden bei 200 °C Sumpftemperatur im Vakuum gerührt. Nach Abkühlen wurden folgende Eigenschaften des Polyesters festgestellt:

Hydroxylzahl (mg KOH/g): 182
Säurezahl (mg KOH/g): 0,5
Viskosität (mPa*s bei 25 °C): 17000

### 3. **Polyurethan-Hartschäume**

Aus den oben beschriebenen Polyesterolen der OH-Zahl 150 bis 250 wurden nach folgender allgemeiner Vorschrift Polyurethan-Hartschäume hergestellt. Alle Teile sind Gewichtsteile:

| | |
|---|---|
| L 2830 | 12 Teile |
| Polyester (OH- Zahl 150-250) | 73 Teile |
| TCPP | 15 Teile |
| B 8443 | 3 Teile |
| Wasser | 0,8 Teile |
| DB | 1,7 Teile |
| 1792 | 2,8 Teile |
| | |
| n-Pentan | Ca. 13,4 Teile |
| | |
| 44V70L | Ca. 200 Teile |

Die exakte Menge n-Pentan wird entsprechend der gewünschten Schaum-Rohdichte berechnet. Die exakte Menge des Isocyanates V70L wird so berechnet, dass eine Kennzahl (100*molares Verhältnis von NCO-Gruppen zu NCO-reaktiven-Gruppen) von 350 erreicht wird.

Die Polyole, Stabilisatoren, Wasser, Flammschutzmittel & Katalysatoren werden 60 s mittels eines Pendraulikrührers bei 1000 U/min verrührt. n-Pentan wird zugegeben und bei 500-1000 U/min homogenisiert. Das Isocyanat wird zugegeben und 10 s bei 4200 U/min verrührt. Das Gemisch wird in eine Papierform gegossen und ausreagieren gelassen. Nach Lagerung bei Raumtemperatur über Nacht wird der Hartschaum zersägt und analysiert.

Der Vergleichs-Standardpolyester wurde aus Glutarsäure und Ethylenglykol hergestellt (OH-Zahl 216, Viskosität bei 25 °C 1980 mPas).

| **Polyester** | **Standard** | **2.3** | **2.4** | **2.5** | **2.6** | **2.7** |
|---|---|---|---|---|---|---|
| **Rohdichte [g/L]** | 40 | 41 | 41 | 41 | 42 | 42 |
| **Brandtest [cm]** | 10 | 12 | 13 | 11 | 12 | 10 |
| **Druckspannung bei 10 % Stauchung, parallel; quer [kPa]** | 345; 153 | 364;164 | 378; 155 | 402; 151 | 424; 169 | 356; 220 |
| **Offenzelligkeit [%]** | 9,3 | 6,7 | 6,6 | 7,8 | 8 | 7,3 |
| **Dimensionsstabilitä t -22 °C [%]** | 0,1; 0,3; 0,2 | 0,2; 0,2; 0,1 | 0,8; 0,0; 0,1 | 0,8; 0,1; 0,1 | 0,2; 0,4; 0,5 | 0,3; 0,4; 0,3 |
| **Dimensionsstabilitä t 100 °C [%]** | 0,5; 0,4; 0,7 | 0,7; 0,3; 0,3 | 1,1; 0,5; 0,6 | 0,6; 0,4; 0,4 | 1,2; 0,5; 0,1 | 0,3; 0,3; 0,5 |

**Patentansprüche**

1.  Verfahren zur Herstellung von Hydroxylgruppen-terminierten Polyesterolen (A), **dadurch gekennzeichnet, dass**

    in einem ersten Verfahrensschritt zunächst Imidgruppen-enthaltende Mono- oder Polycarbonsäuren (B) durch Umsetzung von

    (B.1) mindestens einer Aminosäure, welche eine oder mehrere Aminogruppen und eine oder mehrere Säuregruppen aufweist, mit
    (B.2) mindestens einem Carbonsäureanhydrid, welches genau eine Anhydridgruppe und keine weiteren freien Säuregruppen aufweist,
in Gegenwart von
(C) mindestens einem Di- und/oder Polyol mit einem Molekulargewicht von 62 bis 1000 g/mol,

hergestellt werden, und in einem zweiten Verfahrensschritt das im ersten Verfahrensschritt erhaltene Reaktionsgemisch

- ohne Aufreinigung,
- *gegebenenfalls* unter Zusatz von weiterer Komponente B.2 und/oder weiterer Komponente C und/oder
(D) weiteren Mono- und/oder Polycarbonsäuren, die nicht unter die Definition der Komponenten (B) und (B.2) fallen,

unter Polykondensationsbedingungen verestert wird,
wobei gegebenenfalls im ersten Verfahrensschritt und/oder im zweiten Verfahrensschritt Hilfs- und Zusatzstoffe (E) verwendet werden und
wobei im ersten Verfahrensschritt neben Komponente (C) kein weiteres Lösemittel zugesetzt wird.

2. Verfahren zur Herstellung von Hydroxylgruppen-terminierten Polyesterolen (A) gemäß Anspruch 1, **dadurch gekennzeichnet, dass** der erste Verfahrensschritt bei Temperaturen von 25°C bis 200 °C, bevorzugt von 80 bis 180 °C durchgeführt wird, und dass der zweite Verfahrensschritt bei Temperaturen von 150 bis 250 °C, bevorzugt von 180 bis 220°C und bei vermindertem Druck im Bereich von 0,1 bis 300 mbar, bevorzugt 1 bis 200 mbar durchgeführt wird.

3. Hydroxylgruppen terminierte Polyesterole (A), die erhältlich sind nach dem Verfahren gemäß Anspruch 1 oder 2, und die bevorzugt einen Schmelzpunkt < 23°C, besonders bevorzugt ≤ 20°C aufweisen.

4. Verfahren gemäß Anspruch 1 oder 2 oder Hydroxylgruppen-terminierten Polyesterole (A) gemäß Anspruch 3, wobei bei der Herstellung der Hydroxylgruppen-terminierten Polyesterole (A) neben den Komponenten (B.1), (B.2), (C), (D) und (E) eine weitere Komponenten (F) verwendet wird, bei der es sich um Di- und Polyole, die nicht unter die Definition der Komponente (C) fallen, handelt, und wobei der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt.

5. Verfahren gemäß Anspruch 1 oder 2 oder Hydroxylgruppen-terminierten Polyesterole (A) gemäß Anspruch 3, wobei bei Herstellung der Hydroxylgruppen-terminierten Polyesterole (A) ausschließlich die Komponenten (B.1), (B.2), (C), (D) und (E) eingesetzt werden.

6. Verfahren gemäß Anspruch 1 oder 2, 4 oder 5, oder Hydroxylgruppen-terminierte Polyesterole (A) gemäß einem der Ansprüche 3 bis 5, wobei bei der Umsetzung der Komponenten (B.1) und (B.2) das molare Verhältnis von Aminogruppen aus den Aminosäuren (B.1) zu Anhydridgruppen aus den Carbonsäureanhydriden (B.2) im Bereich von 1,5:1 bis 1:1,5, bevorzugt 0,9:1 bis 1:0,9, besonders bevorzugt 0,95:1 bis 1:0,95 liegt.

7. Verfahren gemäß Anspruch 1 oder 2 oder 4 bis 6, oder Hydroxylgruppen-terminierte Polyesterole (A) gemäß einem der Ansprüche 3 bis 6, **dadurch gekennzeichnet, dass** die Aminosäuren (B.1) ausgewählt sind aus der Gruppe bestehend aus Monoaminomonocarbonsäure, Monoamino-dicarbonsäure, Diamino-monocarbonsäure und Diamino-dicarbonsäure.

8. Verfahren gemäß Anspruch 1 oder 2 oder 4 bis 7, oder Hydroxylgruppen-terminierte Polyesterole (A) gemäß einem der Ansprüche 3 bis 7, **dadurch gekennzeichnet, dass** die Aminosäuren (B.1) ausgewählt sind aus der Gruppe bestehend aus Anthranilsäure (o-Aminobenzoesäure), m-Aminobenzoesäure, p-Aminobenzoesäure, Alanin, Arginin, Asparagin, Asparaginsäure, Cystein, Glutamin, Glutaminsäure, Glycin, Histidin, Isoleucin, Leucin, Lysin, Methionin, Phenylalanin, Serin, Threonin, Tryptophan, Tyrosin, Valin, Ornithin, 3-Aminopropionsäure, 2-Aminobuttersäure, 4-Aminobuttersäure, 6-Aminocapronsäure, 2-Amino-2-methylpropionsäure, 11-Aminoundecansäure, Homoserin.

9. Verfahren gemäß Anspruch 1 oder 2 oder 4 bis 8, oder Hydroxylgruppen-terminierte Polyesterole (A) gemäß einem der Ansprüche 3 bis 8, **dadurch gekennzeichnet, dass** die Carbonsäureanhydride (B.2) ausgewählt sind aus der Gruppe bestehend aus Phthalsäureanhydrid, Tetrachlorphthalsäureanhydrid, 3-Chloro-Phthalsäureanhydrid, Maleinsäureanhydrid, Citraconsäureanhydrid, Itaconsäureanhydrid, Bernsteinsäureanhydrid, 1,8- Naphthalsäureanhydrid, Derivate der genannten Anhydride, wie z.B. Alkyl- oder Alkenylbernsteinsäuren mit unverzweigten oder verzweigten C1 bis C24 -Alkyl- bzw. -Alkenylketten, wie (1-Dodecen-1-yl) oder 2-Dodecen-1-yl)bernsteinsäureanhydrid, n-Octenyl-Bernsteinsäureanhydrid, Tetradecenylbernsteinsäureanhydrid, Hexadecenylbernstein-säureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, und Diels-Alder-Adduke aus Furanen und z.B. Maleinsäureanhydrid.

10. Verfahren gemäß Anspruch 1 oder 2 oder 4 bis 9, oder Hydroxylgruppen-terminierte Polyesterole (A) gemäß einem der Ansprüche 3 bis 9, **dadurch gekennzeichnet**, die Di- und Polyole (C) ausgewählt sind aus der Gruppe bestehend aus Ethylenglykol, 1,2-Propandiol, 1,3-Propandiol, 1,4-Butandiol, 2-Methylpropandiol-1,3, 1,5-Pentandiol, Neopentylglykol 1,6-Hexandiol, 3-Methylpentan-1,5-diol, 2,3-Butandiol, Diethylenglykol, Triethylenglykol, Tetraethylenglykol, Dipropylenglykol, Tripropylenglykol, sowie Glycerin, 1,1,1-Trimethylolpropan, Pentaerythrit, Rizinusöl, Oligomere des 1,4-Butylenglykols, Polyetherpolyole, wie Poly(oxyalkylen)polyole und Polyesterpolyole.

11. Verfahren gemäß Anspruch 1 oder 2 oder 4 bis 10, oder Hydroxylgruppen-terminierte Polyesterole (A) gemäß einem der Ansprüche 3 bis 10, **dadurch gekennzeichnet, dass** die Mono- und/oder Polycarbonsäuren (D) ausgewählt sind aus der Gruppe bestehend aus Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Phthalsäure, Isophthalsäure, Terephthalsäure, Maleinsäure, Fumarsäure, Citraconsäure, Mesaconsäure, Ölsäure, Ricinolsäure und Furandicarbonsäure.

12. Verfahren gemäß Anspruch 1 oder 2 oder 4 bis 11, oder Hydroxylgruppen-terminierte Polyesterole (A) gemäß einem der Ansprüche 3 bis 11, **dadurch gekennzeichnet, dass** die Hydroxylgruppen-terminierten Polyesterole (A) OH-Zahlen von 20 bis 500 mg KOH/g und zahlenmittlere Funktionaltäten von 1,4 bis 3,5, aufweisen.

13. Verfahren gemäß Anspruch 1 oder 2 oder 4 bis 12, oder Hydroxylgruppen-terminierte Polyesterole (A) gemäß einem der Ansprüche 3 bis 12, **dadurch gekennzeichnet, dass** mindestens eine der Komponenten (B.1), (B.2), (C), (D), (E) und (F) biobasiert ist.

14. Verwendung der Hydroxylgruppen-terminierte Polyesterole (A) gemäß einem der Ansprüche 3 bis 13 zur Herstellung von Polyurethanen, bevorzugt Polyurethan-Schäumen.

**Claims**

1. Process for preparing hydroxyl group-terminated polyesterols (A), **characterized in that**,

   in a first process step, imide group-containing mono- or polycarboxylic acids (B) are first prepared by reacting

   (B.1) at least one amino acid having one or more amino groups and one or more acid groups with
   (B.2) at least one carboxylic anhydride having precisely one anhydride group and no further free acid groups
   in the presence of
   (C) at least one diol and/or polyol having a molecular weight of 62 to 1000 g/mol,

   and, in a second process step, the reaction mixture obtained in the first process step is esterified

   - without purification,
   - *optionally* with addition of further component B.2 and/or further component C and/or (D) further mono- and/or polycarboxylic acids which do not fall under the definition of components (B) and (B.2), under polycondensation conditions,

   wherein auxiliaries and additives (E) are optionally used in the first process step and/or in the second process step and

   wherein no further solvent besides component (C) is added in the first process step.

2. Process for preparing hydroxyl group-terminated polyesterols (A) according to Claim 1, **characterized in that** the first process step is conducted at temperatures of 25°C to 200°C, preferably of 80 to 180°C, and **in that** the second process step is conducted at temperatures of 150 to 250°C, preferably of 180 to 220°C and at reduced pressure in the range from 0.1 to 300 mbar, preferably 1 to 200 mbar.

3. Hydroxyl group-terminated polyesterols (A) which are obtainable by the process according to Claim 1 or 2 and which preferably have a melting point of < 23°C, particularly preferably ≤ 20°C.

4. Process according to Claim 1 or 2 or hydroxyl group-terminated polyesterols (A) according to Claim 3, wherein, in the preparation of the hydroxyl group-terminated polyesterols (A), in addition to components (B.1), (B.2), (C), (D) and (E) a further component (F) is used which is diols and polyols which do not fall under the definition of component (C), and wherein the proportion of components (B.1), (B.2), (C), (D) and (E) is ≥ 80, preferably ≥ 90, particularly preferably ≥ 95 percent by weight of the total amount of all components used.

5. Process according to Claim 1 or 2 or hydroxyl group-terminated polyesterols (A) according to Claim 3, wherein in the preparation of the hydroxyl group-terminated polyesterols (A) exclusively the components (B.1), (B.2), (C), (D) and (E) are used.

6. Process according to Claim 1 or 2, 4 or 5 or hydroxyl group-terminated polyesterols (A) according to any of Claims 3 to 5, wherein in the reaction of components (B.1) and (B.2) the molar ratio of amino groups from the amino acids (B.1) to anhydride groups from the carboxylic anhydrides (B.2) is in the range from 1.5:1 to 1:1.5, preferably 0.9:1 to 1:0.9, particularly preferably 0.95:1 to 1:0.95.

7. Process according to Claim 1 or 2 or 4 to 6 or hydroxyl group-terminated polyesterols (A) according to any of Claims 3 to 6, **characterized in that** the amino acids (B.1) are selected from the group consisting of monoaminomonocarboxylic acid, monoaminodicarboxylic acid, diaminomonocarboxylic acid and diaminodicarboxylic acid.

8. Process according to Claim 1 or 2 or 4 to 7 or hydroxyl group-terminated polyesterols (A) according to any of Claims 3 to 7, **characterized in that** the amino acids (B.1) are selected from the group consisting of anthranilic acid (o-aminobenzoic acid), m-aminobenzoic acid, p-aminobenzoic acid, alanine, arginine, asparagine, aspartic acid, cysteine, glutamine, glutamic acid, glycine, histidine, isoleucine, leucine, lysine, methionine, phenylalanine, serine, threonine, tryptophan, tyrosine, valine, ornithine, 3-aminopropionic acid, 2-aminobutyric acid, 4-aminobutyric acid, 6-aminocaproic acid, 2-amino-2-methylpropionic acid, 11-aminoundecanoic acid, homoserine.

9. Process according to Claim 1 or 2 or 4 to 8 or hydroxyl group-terminated polyesterols (A) according to any of Claims 3 to 8, **characterized in that** the carboxylic anhydrides (B.2) are selected from the group consisting of phthalic anhydride, tetrachlorophthalic anhydride, 3-chlorophthalic anhydride, maleic anhydride, citraconic anhydride, itaconic anhydride, succinic anhydride, 1,8-naphthalic anhydride, derivatives of the anhydrides mentioned, such as for example alkyl- or alkenylsuccinic acids having unbranched or branched C1 to C24 alkyl or alkenyl chains, such as (1-dodecen-1-yl) or 2-dodecen-1-yl)succinic anhydride, n-octenylsuccinic anhydride, tetradecenylsuccinic anhydride, hexadecenylsuccinic anhydride, octadecenylsuccinic anhydride, alkyl- and/or alkenylmaleic acids having unbranched or branched C1 to C24 alkyl or alkenyl chains, such as dimethylmaleic anhydride, n-dodecenylmaleic anhydride, and Diels-Alder adducts of furans and for example maleic anhydride.

10. Process according to Claim 1 or 2 or 4 to 9 or hydroxyl group-terminated polyesterols (A) according to any of Claims 3 to 9, **characterized in that** the diols and polyols (C) are selected from the group consisting of ethylene glycol, propane-1,2-diol, propane-1,3-diol, butane-1,4-diol, 2-methylpropane-1,3-diol, pentane-1,5-diol, neopentyl glycol, hexane-1,6-diol, 3-methylpentane-1,5-diol, butane-2,3-diol, diethylene glycol, triethylene glycol, tetraethylene glycol, dipropylene glycol, tripropylene glycol, and also glycerol, 1,1,1-trimethylolpropane, pentaerythritol, castor oil, oligomers of 1,4-butylene glycol, polyether polyols, such as poly(oxyalkylene) polyols and polyester polyols.

11. Process according to Claim 1 or 2 or 4 to 10 or hydroxyl group-terminated polyesterols (A) according to any of Claims 3 to 10, **characterized in that** the mono-and/or polycarboxylic acids (D) are selected from the group consisting of oxalic acid, malonic acid, succinic acid, glutaric acid, adipic acid, pimelic acid, suberic acid, azelaic acid, sebacic acid, undecanedioic acid, dodecanedioic acid, brassylic acid, tetradecanedioic acid, thapsic acid, phthalic acid, isophthalic acid, terephthalic acid, maleic acid, fumaric acid, citraconic acid, mesaconic acid, oleic acid, ricinoleic acid and furandicarboxylic acid.

12. Process according to Claim 1 or 2 or 4 to 11 or hydroxyl group-terminated polyesterols (A) according to any of Claims 3 to 11, **characterized in that** the hydroxyl group-terminated polyesterols (A) have OH numbers of 20 to 500 mg KOH/g and number-average functionalities of from 1.4 to 3.5.

13. Process according to Claim 1 or 2 or 4 to 12 or hydroxyl group-terminated polyesterols (A) according to any of Claims 3 to 12, **characterized in that** at least one of the components (B.1), (B.2), (C), (D), (E) and (F) is bio-based.

14. Use of the hydroxyl group-terminated polyesterols (A) according to any of Claims 3 to 13 for the preparation of polyurethanes, preferably polyurethane foams.

**Revendications**

1. Procédé de préparation de polyesterols (A) terminés par des groupes hydroxyle, **caractérisé en ce que**

dans une première étape du procédé, on prépare d'abord des acides mono- ou polycarboxyliques (B) contenant des groupes imide par réaction

(B.1) d'au moins un acide aminé, qui comprend un ou plusieurs groupes amino et un ou plusieurs groupes acides, avec
(B.2) au moins un anhydride carboxylique, qui comprend exactement un groupe anhydride et ne comprend aucun autre groupe acide libre,
en présence
(C) d'au moins un di- et/ou un polyol ayant une masse moléculaire de 62 à 1 000 g/mol,

et, dans une deuxième étape du procédé, on estérifie le mélange réactionnel obtenu dans la première étape du procédé

- sans purification,
- *éventuellement* avec addition d'un autre composant B.2 et/ou d'un autre composant C et/ou (D) d'autres acides mono- et/ou polycarboxyliques qui n'entrent pas dans la définition des composants (B) et (B.2),

dans les conditions d'une polycondensation,
dans lequel, éventuellement dans une première étape du procédé et/ou dans une seconde étape du procédé, on utilise des adjuvants et des additifs (E), et
dans lequel, dans la première étape du procédé, et outre le composant (C), aucun autre solvant n'est ajouté.

2. Procédé de préparation de polyesterols (A) terminés par des groupes hydroxyle selon la revendication 1, **caractérisé en ce que** la première étape du procédé est mise en œuvre à des températures de 25 °C à 200 °C, de préférence de 80 à 180 °C, et **en ce que** la seconde étape du procédé est mise en œuvre à des températures de 150 à 250 °C, de préférence de 180 à 220 °C et sous une pression réduite dans la plage de 0,1 à 300 mbar, de préférence de 1 à 200 mbar.

3. Polyesterols (A) terminés par des groupes hydroxyle, pouvant être obtenus par le procédé selon la revendication 1 ou 2, et qui de préférence présentent un point de fusion < 23 °C, d'une manière particulièrement préférée ≤ 20 °C.

4. Procédé selon la revendication 1 ou 2 ou polyesterols (A) terminés par des groupes hydroxyle selon la revendication 3, dans lesquels, lors de la préparation des polyesterols (A) terminés par des groupes hydroxyle, on utilise en plus des composants (B.1), (B.2), (C), (D) et (E) un autre composant (F), pour ce qui concerne lequel il s'agit de di- et de polyols qui n'entrent pas dans la définition du composant (C), et la proportion des composants (B.1), (B.2), (C), (D) et (E) par rapport à la quantité totale de tous les composants utilisés étant ≥ 80, de préférence ≥ 90, d'une manière particulièrement préférée ≥ 95 pour cent en poids.

5. Procédé selon la revendication 1 ou 2 ou polyesterols (A) terminés par des groupes hydroxyle selon la revendication 3, exclusivement les composants (B.1), (B.2), (C), (D) et (E) étant utilisés lors de la préparation des polyesterols (A) terminés par des groupes hydroxyle.

6. Procédé selon la revendication 1 ou 2, 4 ou 5, ou polyesterols (A) terminés par des groupes hydroxyle selon les revendications 3 à 5, le rapport en moles des groupes amino des acides aminés (B.1) aux groupes anhydride des anhydrides carboxyliques (B.2) étant, lors de la réaction des composants (B.1) et (B.2), dans la plage de 1,5:1 à 1:1,5, de préférence de 0,9:1 à 1:0,9, d'une manière particulièrement préférée de 0,95:1 à 1:0,95.

7. Procédé selon la revendication 1 ou 2 ou 4 à 6, ou polyesterols (A) terminés par des groupes hydroxyle selon l'une des revendications 3 à 6, **caractérisé en ce que** les acides aminés (B.1) sont choisis dans le groupe consistant en un acide monoamino-monocarboxylique, un acide monoamino-dicarboxylique, un acide diamino-monocarboxylique et un acide diamino-dicarboxylique.

8. Procédé selon la revendication 1 ou 2 ou 4 à 7, ou polyesterols (A) terminés par des groupes hydroxyle selon l'une des revendications 3 à 7, **caractérisés en ce que** les acides aminés (B.1) sont choisis dans le groupe consistant en l'acide anthranilique (acide o-aminobenzoïque), l'acide m-aminobenzoïque, l'acide p-aminobenzoïque, l'alanine, l'arginine, l'asparagine, l'acide asparagique, la cystéine, la glutamine, l'acide glutamique, la glycine, l'histidine, l'isoleucine, la leucine, la lysine, la méthionine, la phénylalanine, la sérine, la thréonine, le tryptophane, la tyrosine, la valine, l'ornithine, l'acide 3-aminopropionique, l'acide 2-aminobutyrique, l'acide 4-aminobutyrique, l'acide 6-aminocaproïque, l'acide 2-amino-2-méthylpropionique, l'acide 11-aminoundécanoïque, l'homosérine.

9. Procédé selon la revendication 1 ou 2 ou 4 à 8, ou polyesterols (A) terminés par des groupes hydroxyle selon l'une des revendications 3 à 8, **caractérisé en ce que** les anhydrides carboxyliques (B.2) sont choisis dans le groupe consistant en l'anhydride phtalique, l'anhydride tétrachlorophtalique, l'anhydride 3-chlorophtalique, l'anhydride maléique, l'anhydride citraconique, l'anhydride itaconique, l'anhydride succinique, l'anhydride 1,8-naphtalique, les dérivés des anhydrides mentionnés tels que par exemple les acides alkyl- ou alcénylsucciniques ayant des chaînes alkyle ou alcényle en C1 à C24 non ramifiées ou ramifiées, tels que le (1-dodécèn-1-yle) ou l'anhydride 2-dodécèn-1-yl)succinique, l'anhydride n-octényl-succinique, l'anhydride tétradécényl-succinique, l'anhydride hexadécényl-succinique, l'anhydride octadécényl-succinique, les acides alkyl- et/ou alcénylmaléiques ayant des chaînes alkyle ou alcényle en C1 à C24 non ramifiées ou ramifiées, tels que l'anhydride diméthylmaléique, l'anhydride n-dodécénylmaléique et les adduits de Diels-Alder obtenus à partir du furane et par exemple l'anhydride maléique.

10. Procédé selon la revendication 1 ou 2 ou 4 à 9, ou polyesterols (A) terminés par des groupes hydroxyle selon l'une des revendications 3 à 9, **caractérisés en ce que** les di- et les polyols (C) sont choisis dans le groupe consistant en l'éthylèneglycol, le 1,2-propanediol, le 1,3-propanediol, le 1,4-butanediol, le 2-méthylpropanediol-1,3, le 1,5-pentanediol, le néopentylglycol, le 1,6-hexanediol, le 3-méthylpentane-1,5-diol, le 2,3-butanediol, le diéthylèneglycol, le triéthylèneglycol, le tétraéthylèneglycol, le dipropylèneglycol, le tripropylèneglycol, ainsi que le glycérol, le 1,1,1-triméthylolpropane, le pentaérythritol, l'huile de ricin, les oligomères du 1,4-butylèneglycol, les polyétherpolyols tels que les poly(oxyalkylène)polyols et les polyesterpolyols.

11. Procédé selon la revendication 1 ou 2 ou 4 à 10, ou polyesterols (A) terminés par des groupes hydroxyle selon l'une des revendications 3 à 10, **caractérisé en ce que** les acides mono- et/ou polycarboxyliques (D) sont choisis dans le groupe consistant en l'acide oxalique, l'acide malonique, l'acide succinique, l'acide glutarique, l'acide adipique, l'acide pimélique, l'acide subérique, l'acide azélaïque, l'acide sébacique, l'acide undécanedioïque, l'acide dodécanedioïque, l'acide brassylique, l'acide tétradécanedioïque, l'acide hexadécanedioïque, l'acide phtalique, l'acide isophtalique, l'acide téréphtalique, l'acide maléique, l'acide fumarique, l'acide citraconique, l'acide mésaconique, l'acide oléique, l'acide ricinoléique et l'acide furanedicarboxylique.

12. Procédé selon la revendication 1 ou 2 ou 4 à 11, ou polyesterols (A) terminés par des groupes hydroxyle selon l'une des revendications 3 à 11, **caractérisés en ce que** les polyesterols (A) terminés par des groupes hydroxyle présentent des indices d'OH de 20 à 500 mg KOH/g et des fonctionnalités moyennes en nombre de 1,4 à 3,5.

13. Procédé selon la revendication 1 ou 2 ou 4 à 12, ou polyesterols (A) terminés par des groupes hydroxyle selon l'une des revendications 3 à 12, **caractérisés en ce qu'**au moins l'un des composants (B.1), (B.2), (C), (D), (E) et (F) est biosourcé.

14. Utilisation des polyesterols (A) terminés par des groupes hydroxyle selon l'une des revendications 3 à 13 pour préparer des polyuréthanes, en particulier des mousses de polyuréthane.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3217014 B1
- FR 1445078 A
- DE 2023456 A1
- US 1922451 A
- US 2674619 A
- US 1922459 A
- US 3190927 A
- US 3346557 A
- EP 0007502 A
- DE 1694142 A
- DE 1694215 A
- DE 1720768 A

**In der Beschreibung aufgeführte Nicht-Patentliteratur**

- Synthesis and Properties of Polyesterimides and their Isomers. **SUKUMAR MAITI ; SAJAL DAS.** Journal of Applied Polymer Sciene. Wiley & Sons, Inc, 1981, vol. 26, 957-978
- Polyurethane", in "Reaction Polymers. Kunststoff-handbuch. vol. 7
- Polyurethane", "Reaction Polymers. Kunststoff-handbuch. vol. 7
- Polyurethane, herausgegeben von Vieweg und Höchtlein. unststoff-Handbuch. Carl Hanser Verlag, 1966, vol. VII
- **G. OERTEL.** Neuauflage dieses Buches. Carl Hanser Verlag, 1993